**Europäisches Patentamt**

(19) **European Patent Office**

**Office européen des brevets**

(11) Numéro de publication: **0 068 909**

**B1**

# (12) FASCICULE DE BREVET EUROPÉEN

(45) Date de publication du fascicule du brevet:
13.08.86

(51) Int. Cl.⁴: **G 01 S 7/28**

(21) Numéro de dépôt: **82400709.0**

(22) Date de dépôt: **20.04.82**

(54) **Procédé et dispositif de réduction de la puissance des signaux de brouillage reçus par les lobes secondaires d'une antenne radar.**

(30) Priorité: **30.04.81 FR 8108667**

(43) Date de publication de la demande:
**05.01.83 Bulletin 83/1**

(45) Mention de la délivrance du brevet:
**13.08.86 Bulletin 86/33**

(84) Etats contractants désignés:
**DE GB IT NL SE**

(56) Documents cité:
**DE-A-2 939 257**
**FR-A-2 433 759**
**US-A-3 860 924**
**US-A-4 095 222**

**IEEE TRANSACTIONS ON AEROSPACE AND ELECTRONIC SYSTEMS, vol. AES-13, Nr. 6, novembre 1977, pages 690-699, New York, USA, A.FARINA: "Single sidelobe canceller: Theory and evaluation"**
**M.A. JOHNSON; D.C. STONER:ECCM - FROM THE RADAR DESIGNER'S VIEW POINT - MICROWAVE JOURNAL, 3-1978, pages 59-62**
**B. WIDROW; J.R. GLOVER et al.:ADAPTIVE NOICE CANCELLING, IEEE, vol.63, no. 12, 12-1975, pages 1692-1716**

(73) Titulaire: **THOMSON- CSF, 173, Boulevard Haussmann, F-75379 Paris Cedex 08 (FR)**

(72) Inventeur: **Guillerot, Jean- Claude, THOMSON- CSF SCPI 173, bld Haussmann, F-75379 Paris Cedex 08 (FR)**
Inventeur: **Joncour, Hubert, THOMSON- CSF SCPI 173, bld Haussmann, F-75379 Paris Cedex 08 (FR)**
Inventeur: **Auvray, Gérard, THOMSON- CSF SCPI 173, bld Haussmann, F-75379 Paris Cedex 08 (FR)**
Inventeur: **Balduzzi, Daniel, THOMSON- CSF SCPI 173, bld Haussmann, F-75379 Paris Cedex 08 (FR)**

(74) Mandataire: **Benoit, Monique, THOMSON- CSF SCPI 19, avenue de Messine, F-75008 Paris (FR)**

**0 068 909**

## Description

La présente invention concerne un procédé et un dispositif de réduction de la puissance des signaux de brouillage reçus par les lobes secondaires d'une antenne radar. Ces signaux sont en général des signaux de brouillage actif, continus ou découpés, émis par plusiers brouilleurs indépendants, ils sont reçus par les lobes secondaires de l'anrenne du radar et leur niveau est tel qu'ils sont considérés comme des signaux réels provenant de cibles, perturbant complètement le fonctionnement du radar.

Pour se prémunir contre un brouillage actif de cette nature, on a proposé la technique de contre-mesure applée OLS, pour opposition de lobes secondaires (en anglais SCL) dont une description schématique peut être trouvée dans un article de M.A.JOHNSON et D.C.STONER "ECCM from the radar designer's view point" paru dans la revue Microwave Journal de mars 1978, pages 59 - 62 (contre-contre-mesures électroniques du point de vue du concepteur radar).

Suivant cette technique on utilise en plus de l'antenne du radar et de sa voie de traitement correspondante, un nombre N d'antennes auxiliaires associées à N voies de réception. On effectue une combinasion linéaire pondérée des N signaux complexes délivrés par les N voies auxiliaires que l'on soustrait au signal de la voie principale, les coefficients de pondération étant déterminés à partir des signaux reçus sur les voies auxiliaires, de manière à réduire la puissance de brouillage résultante sur la voie principale.

Cependant l'efficacité du procédé tel que résumé ci-dessus, apparaît fondée sur la détemination des gains relatifs aux signaux de brouillage pour chacun des voies auxiliaires par rapport au gain de la voie principale. On remarque alors dans ces conditons que tout signal autre que les signaux de brouillage proprement dits, c'est-à-dire le bruit thermique, les échos de fouillis, des échos utiles également doit être considéré comme un signal parasite venant perturber la détermination exacte des coefficients de pondération et nuire de ce fait à la qualité de l'élimination du brouillage. Dans les dispositifs relevant de l'art antérieur en conséquence, la mesure des coefficients de pondération est ainsi faite qu'il n'est pas tenu compte de l'existence dans les tranches distance ou cases distance découpées dans les périodes de répétition du radar, d'une part de la présence effective du brouillage et d'autre part de celle des signaux parasites qui ont été définis. Les coefficients de pondération sont donc calculés de façon peu précise.

D'autre part, le document FR-A-2 433 759 divulgue un procédé d'élimination du brouillage qui consiste à fournir deux signaux Io et Qo obtenus par les combinaisons linéaires

$$Io = I_1 - \alpha I_2 - \beta Q_2$$
$$Qo = Q_1 + \beta I_2 - \alpha Q_2,$$

où - $\alpha$ et $\beta$ sont des coefficients déterminés de façon à annuler le terme de brouillage dans les expressions Io et Qo;

- $I_1$ $Q_1$ et $I_2$, $Q_2$ sont les signaux en quadrature de phase relatifs à deux antennes de réception distinctes $A_1$ et $A_2$.

Le document DE-A-2 939 257 (figure 2) divulgue un dispositif de radar équipé d'un circuit à opposition de lobes secondaires, dans lequel un circuit MTI pour éliminer les échos fixes, un multiplicateur de pondération ainsi qu'un multiplicateur de corrélation sont utilisés.

Le document US-A-3 860 924 divulgue un circuit de suppression des lobes secondaires d'une antenne en combinaison avec un système d'élimination des échos fixes MTI.

Le but de la présente invention est de définir un procédé et un dispositif de réduction de la puissance des signaux de brouillage actif, relevant de la technique de l'opposition des lobes secondaires dans lesquels on remédie aux inconvénients qui ont été rappelés.

Suivant l'invention, un procédé de réduction de la puissance des signaux de brouillage reçus par les lobes secondaires d'une antenne de radar à laquelle sont associées des antennes auxiliaires, suivant lequel on effectue une combinaison linéaire pondérée des signaux complexes délivrés par les voies auxiliaires que l'on soustrait au signal de la voie principale, voies associées respectivement auxdites antennes, avec détermination de coefficients de pondération, pour réduire la puissance de brouillage résultante, caractérisé par les étapes suivantes:

- effectuer sur toutes les voies un traitement préalable d'élimination des échos fixes ou se déplaçant lentement;

- déterminér les cases distance brouillées en comparant le signal reçu dans la voie principale aux signaux reçus respectivement dans les voies auxiliaires et comparer ce niveau de l'information case distance brouillée à un seuil déterminé en fonction du niveau du bruit thermique;

- déterminer les coefficients de pondération (Wi) à partir des fonctions de covariance des signaux auxiliaires entre eux et des fonctions d'intercorrelation entre le signal principal et les signaux auxiliairés des cases distance brouillées;

- effectuer la combinaison linéaire pondérée des signaux complexes (Vi) relatifs aux seules cases distance brouillées avec les coefficients de pondération déterminés précédemment (Wi) égale à $\Sigma$ Wi Vi;

- et soustraire le signal résultant de ladite combinaison du signal de la voie principale.

D'autres caractéristiques et avantages de l'invention apparaîtront au cours de la description du procédé et d'un dispositif de mise en oeuvre donné à titre d'exemple non limitatif, à l'aide des figures qui représentent:

- la figure 1, un diagramme schématique d'un dispositif conforme à l'invention;

- la figure 2, un diagramme schématique d'un dispositif de détection du brouillage dans les cases distance;

- la figure 3, un dispositif de sélection et de mise en mémoire des cases distance brouillées utilisées pour le calcul des coefficients de pondération.

On constate que dans le procédé de réduction du brouillage actif par la technique dite OLS (opposition de lobes secondaires), le calcul des coefficients de pondération à utiliser pour réaliser la combinaison linéaire des signaux provenant des voies auxiliaires dans le but ensuite de soustraire le signal résultant du signal reçu dans la voie principale, n'était pas très précis, car il n'était pas tenu compte dans ce calcul de l'existence des signaux perturbateurs, autres que les signaux de brouillage actif dont il faut réduire la puissance; ces signaux perturbateurs, en l'occurrence, sont le bruit thermique, les échos de fouillis (clutter dans la terminologie anglosaxonne) et les échos utiles qui dans ce cas peuvent être considérés comme perturbateurs, principalement des échos utiles de grande puissance situés au début d'une recurrence, c'est-à-dire à faible distance du radar.

On note également que suivant l'art antéerieur, le calcul des coefficients de pondération et l'opposition se font sur toutes les cases distance brouillées ou non.

Suivant l'invention, on veut dans le calcul des coefficients de pondération éliminer l'influence des signaux perturbateurs appelés aussi signaux parasites pour avoir des coefficients déterminés de façon plus précise, qui conféreront une meilleure précision à la phase finale du procédé utilisé, qui permettra d'obtenir un signal utile dans lequel le brouillage sera fortement diminué sinon éliminé.

Dans une première étape du procédé suivant l'invention, on effectue sur toutes les voies considérées du radar, c'est-à-dire sur la voie principale et sur toutes les voies auxiliaires, un traitement visant à éliminer avec le maximum d'efficaité certains de ces signaux parasites. Ce traitement est celui connu sous le nom d'elimination des échos fixes (MTI dans la terminologie anglosaxonne), dont il paraît inutile de donner une description particulière.

Les signaux qui ont ce traitement d'elimination des échos fixes ou à déplacement à faible vitesse sont soumis ensuite à un traitement consistant à déterminer les cases distance (ou tranches distance) définies dans chaque récurrence, qui sont effectivement brouillées et ce en comparant pour chaque case distance l'intensité du signal reçu dans voie principale à l'intensité des signaux reçus respectivement dans les différentes voies auxiliaires associées. Une case est alors réputée brouillée si la puissance du signal correspondant reçu dans une voie auxiliaire est supérieure à la puissance su signal correspondant reçu dans la voie principale.

Les informations cases brouillées ainsi déterminées sont validées pour tenir compte du bruit thermique, la validation consistant à comparer le niveau de l'information case brouillée à un seuil déterminé en fonction du niveau du bruit thermique.

Les informations cases brouillées après qu'elles aient été validées sont mises en mémoire et une sélection en est faite pour le calcul des coefficients de pondération. On n'utilise pour ce calcul que les informations cases brouillées provenant de cases groupées en fin de récurrence où les résidus des signaux parasites qui pourraient subsister sont très faibles et où l'on évite les échos utiles proches de forte puissance.

Les coefficients de pondération ainsi calculés de façon plus précise que suivant l'art antérieur, sont utilisés pour réaliser la combinasion linéaire des signaux issus des voies auxiliaires pour les cases distance effectivement brouillées dans la récurrence qui a servi au calcul desdits coefficients préalablement retardée du temps correspondant à une récurrence et du temps nécessire au calcul. Le même processus se déroule pour chacune des récurrences suivants. Toutefois lorsque le gain des voies auxiliaires varie peu, le calcul des coeffients de pondération peut ne pas être renouvelé à chaque récurrence. Le signal résultant de la combinasion linéaire est ensuite retranché du signal de la voie principale, donnant un signal utile pour lequel la puissance du brouillage est fortement résuite, sinon éliminée.

On notera, que suivant l'invention, la pondération n'étant appliquée qu'aux cases distance effectivement brouillées, il n'y a pas détérioration de l'information contenue dans les cases distance non brouillées.

Un dispositif de mise en oeuvre du procédé suivant l'invention est maintenant décrit.

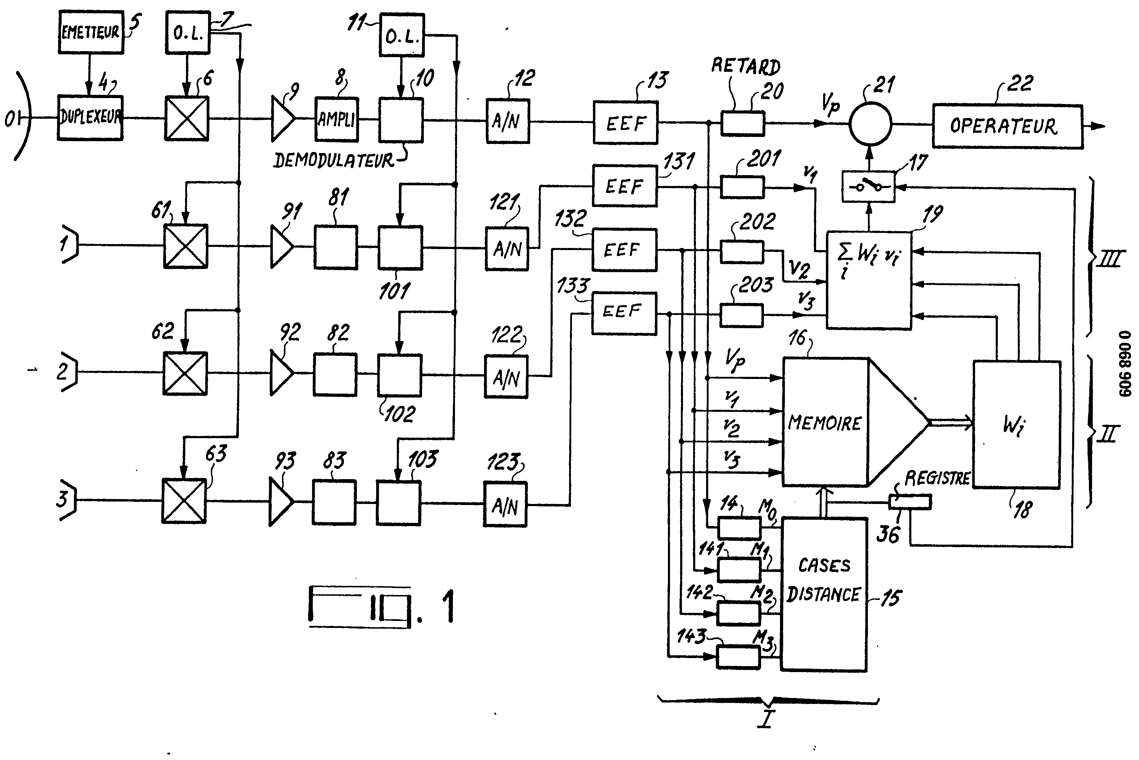

La figure 1 représente un diagramme schématique du dispositif mettant en oeuvre le procédé qui a été décrit.

Ce dispositif comprend une antenne principale repérée 0 avec sa voie de traiment des signaux qu'elle reçoit et une pluralité d'antennes auxiliaires pouvant être omnidirectionnelles et dont trois seulement sont figurées à titre d'exemple, repérées par 1, 2, 3, et qui possèdent chacune une voie de traitement des signaux qu'elles reçoivent respectivement. La voie principale comprend un duplexeur 4 connecté à un émetteur 5 d'une part et à un mélangeur 6, connecté à un oscillateur local 7 et à un amplificateur à fréquence intemédiaire 8 à travers un préamplificateur 9. La sortie de l'amplificateur à fréquence intermédiaire 8 est connectée à un démodulateur amplitude-phase 10 connecté par ailleurs à un oscillateur local 11 différent de l'oscillateur local 7. Le démodulateur 10 est connecté à un codeur analogique-numérique 12, la sortie est reliée à un filtre éliminateur des échos fixes (EEP) 13. Chaque voie de traitement auxiliaire comprend les mêmes éléments que la voie principale, sauf le duplexeur, ces voies n'étant utilisées qu'à réception.

On retrouve, connectés directement aux antennes auxiliaires, les mélangeurs 61, 62, 63 alimentés par l'oscillateur local 7, les préamplificateurs 91, 92, 93, les amplificateurs à fréquence intermédiaire 81, 82, 83, les démodulateurs amplitude-phase 101, 102, 103 connectés à l'oscillateur local 11, les condeurs analogiquenumérique 121, 122, 123 et les filtres EEF 131, 132, 133.

A la sortie des filtres EEF qui réalisent la première partie du procédé suivant l'invention, on trouve trois sous ensembles réalisant chacun une partie du traitement des signaux, suivant le procédé de l'invention.

Un premier sous ensemble I destiné à détecter la présence de brouilleurs actifs dans des cases distance comporte des opérateurs 14, 141, 142 et 143 respectivement connectés aux sorties respectives des filtres EEF 13, 131, 132, 133. Ils ont pour but de déterminer le module des signaux délivrés par les filtres, modules qui alimentent le dispositif 15 de détection des cases distance brouillées. Un second sous ensemble II comprend un dispositif

de sélection et de mémorisation 16 des cases distance brouillées utilisées pour le calcul des coefficients de pondération Wi; il est connecté au dispositif de détection 15, aux sorties des filtres EEF et au dispositif 18 de calcul desdits coefficients de pondération, utilisés dans la combinasion linéaire des signaux issus des voies auxiliaires.

Ce second sous ensemble comprend également un second dispositif de mémorisation 36 qui a pour but de repérer la position dans la récurrence considérée, des cases distance effectivement brouillées et qui est connecté à un commutateur 17 contrôlant la liasion entre un dispositif 19 effectuant la sommation pondérée des signaux des voies auxiliaires et le dispositif de soustraction 21.

Un troisième sous ensemble III connecté également en sortie des filtres EEF 13, 131, 132, 133 comprend essentiellement le dispositif 19 mentionné précédemment, connecté au dispositif de calcul des coefficients de pondération 18, dans lequel on fait la sommation pondérée des signaux en provenance des voies auxiliaires seulement qui lui sont appliqués à travers des circuits à retard 201, 202, 203 dont le retard est égal au temps de la récurrence et celui pris par le calcul des coefficients. La sortie du dispositif 19 est connectée au soustracteur 21 par l'intermédiaire du commutateur 17 qui se trouve sous le contrôle de la mémoire 36 comme cela a été déjà dit.

Ce soustracteur 21 est connecté également à la sortie de la voie principale à travers un élément à retard 20 semblable à ceux déjà mentionnés. Sa sortie est connectée à un dispositif 22 dans lequel se fait la suite du traitement des signaux pour lesquels la puissance du brouillage actif a été fortement réduite.

Le fonctionnement d'un tel dispoditif va être donné dans ce qui suit en remarquant que les différents dispositif et ensemble de circuits qui le composent sont connus par eux-mêmes et qu'une description complète n'est pas nécessaire.

La voie de traitement principale délivre à la sortie du démodulateur amplitude phase 10, le signal principal pouvant contenir un signal brouilleur de forte puissance capté par un lobe secondaire de l'antenne principale 0, sous la forme de ses deux composantes en quadrature XoYo.

Les voies de traitement auxiliaires, dont le but est de prélever les signaux brouilleurs entrant par les lobes secondaires de l'antenne principale, délivrent à la sortie de leurs démodulateurs respectifs 101, 102, 103, les signaux secondaires sous la forme de leurs deux composantes en quadrature, respectivement X1Y1, X2Y2 et X3Y3.

Ces signaux, analogiques, sont convertis en signaux numériques respectivement dans les convertissueurs 12, 121, 122, 123 affectés aux différents voies principale et auxiliaires, et sont soumis à un traitement d'elimination des signaux fixes ou se déplaçant à faible vitesse dand les filtres EEF 13, 131, 132 et 133 respectivement.

A la sortie des filtres EEF les signaux débarassés avec le maximum d'efficité de certains signaux parasites qui ont été définis au début de la description sont appliqués aux différents sous ensembles I, II et III.

Pour le premier sous ensemble, les signaux sont appliqués à des circuits 14, 141, 142 et 143 qui en calculent le module M0, M1, M2 et M3. Ces modules sont appliqués au dispositif 15 de détection de la présence du brouillage du signal principal par les signaux auxiliaires. Ce dispositif détermine les cases distance brouillées, appelées aussi tranches distance ou échantillons, en procédant à la comparasion du module du signal principal M0 avec les modules M1, M2, M3 des signaux auxiliaires.

Les informations de présence de brouillage dans les cases distance de la récurrence issues de 15 sont mises en mémoire dans le dispositif 36, un registre à décalage par exemple, et envoyées également au dispositif de sélection et de mémorisation 16 qui, recevant des sortis des filtres EEF les signaux des voies principale et auxiliaires permet la sélection et la mémorisation des cases distance brouillées qui serviront au calcul, dans le dispositif 18, des coefficients de pondération Wi. Ces coefficients de pondération sont envoyés au dispositif 19 du troisième sous ensemble III qui réalise la sommation pondéré $\Sigma_i W_i v_i$, des signaux des voies auxiliaires, le coefficient i prenant dans l'exemple décrit les valeurs 1, 2 ou 3. Les signaux auxiliaires sortant des filtres EEF 131, 132 et 133 sont préalablement retardés dans les circuits 201, 202, 203 qui peuvent être des mémoires ou des registres. Le retard qu'ils fournissent correspond au temps d'une récurrence additionné du temps pris pour effectuer le calcul des coefficients. Le signal résultant sortant du dispositif 19 représente la sommation pondérée des signaux auxiliaires avec les coefficients de pondération calculés dans le dispositif 18 connecté au dispositif 16, signal résultant pour lequel on a pris en compte essentiellement les signaux de brouillage parasites. Le signal de sortie du dispositif 19 de sommation pondérée est appliqué au soustracteur 21 sous le contrôle du commutateur 17 commandé par la mémoire 36 de sorte que l'opposition, soustraction du signal somme pondérée au signal de la voie principale, n'est faite que pour les cases distance dans lesquelles on a reconnu la présence effective de brouillage. Ce signal résultant comporte donc des composantes dont la valeur représente avec une bonne approximation la valeur des signaux de brouillage captés par les lobes secondaires de l'antenne principale de sorte que l'addition du signal résultant de la combinaison linéaire pondérée dans l'organe de soustraction 21 et du signal de la voie principale Vp issu du filtre EEF 13, a travers un circuit à retard 20 identique aux circuits 201, 202 et 203 appartenant aux voies auxiliaires fournit un signal utile dans lequel la puissance du brouillage est très diminuée. On notera que ce retard permet d'appliquer les pondérations sur les signaux à partir desquelles elles ont été calculées. Ce retard peut être supprimé si les coefficients de pondération varient suffisamment lentement. Toutefois suivant la cadence à laquelle les gains différentiels des antennes se modifient, cadence qui règle le temps pendant lequel les coefficients de pondération restent stationnaires, on procède au renouvellement du calcul de ces coefficients de façon à avoir une réduction du brouillage toujours optimale. Le signal de sortie du circuit 21 est un signal débarassé du brouillage actif qu'il avait recueilli par les lobes secondaires de son antenne principale.

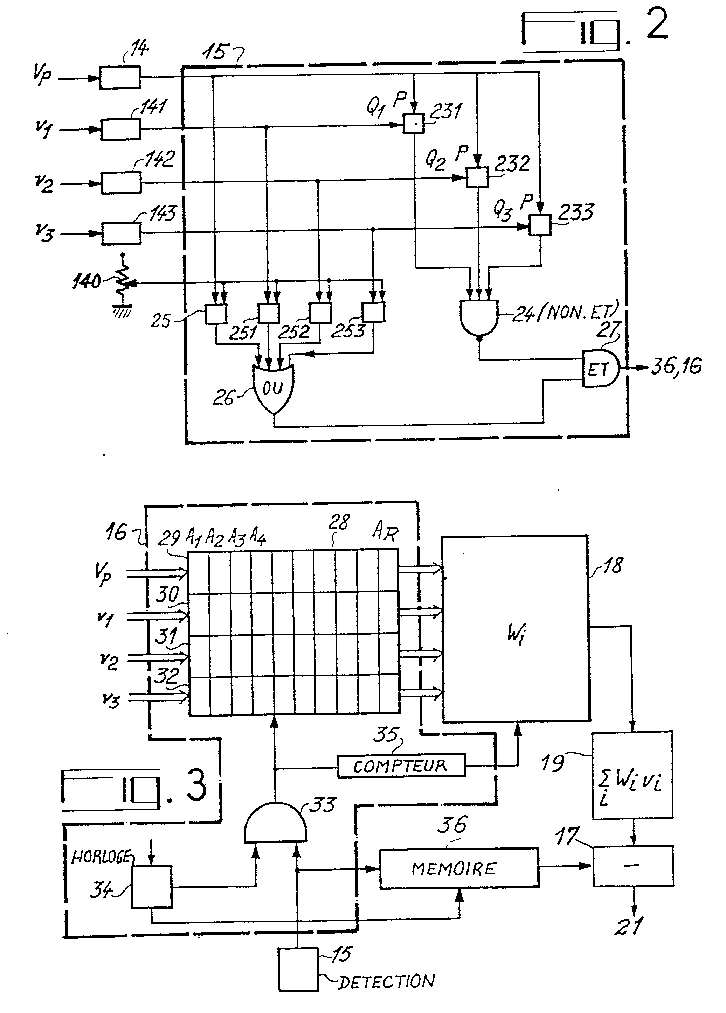

Les figures 2 et 3 représentent respectivement un diagramme schématique du dispositif 15 de détection des

4

cases distance brouillées et du dispositif 16 de sélection et de mémorisation desdites cases.

Cette figure 2 comprend, connectés aux opérateurs 14, 141, 142, 143 calculant les modules des signaux issus des voies principale et auxiliaires, des comparateurs 231, 232, 233 dont les sorties sont connecteés à un circuit NON ET 24, et des circuits à seuil 25, 251, 252 et 253 connectés par un circuit OU 26 à un circuit de sortie ET 27 dont une entrée est la sortie du circuit NON ET 24. Ce circuit 27 est connecté aux circuits mémoire 36 et de sélection et de mémorisation 16 représenté figure 3.

Le fonctionnement du dispositif de détection de présencé de brouillage, tel que représenté figure 2, est basé sur le principe qu'une case distance est réputée brouillée lorsque la puissance reçue dans l'une au moins des voies auxiliaires est supérieure à celle de la voie principale.

Chacun des comparateurs 231, 232 et 233 est connecté par une entrée P à la sortie de l'opérateur 14, calculant le module du signal $V_p$ de la voie principale et par une entrée $Q_1$, $Q_2$, $Q_3$ respectivement aux sorties des opérateurs 141, 142 et 143 calculant les modules des signaux $v_1$, $v_2$, $v_3$ des voies auxiliaires. Les comparateurs fonctionnant en logique positive, l'état logique d'un des comparateurs $C_i$ est donné par la table de vérité suivante: si l'entrée P du comparateur $C_i$ est supérieure à l'entrée $Q_i$, la sortie du comparateur $C_i$ est un 1 logique, tandis que si l'entrée P est inférieure à l'entrée $Q_i$, la sortie du comparateur $C_i$ est un 0 logique.

Entrées $P > Q_i$ $P < Q_i$

Sorties 1 0

L'état logique 0 en sortie correspond à la présence d'un brouillage pour le couple voie principale, voie auxiliaire i dans la case distance considérée. Le circuit NON ET 24 regroupant les sorties des comparateurs délivre ainsi une information de case brouillée dès que le niveau reçu dans au moins une voie auxiliaire est supérieur au niveau reçu dans la voie principale. Cette information de case brouillée est transmise au dispositif mémoire 16, à travers un circuit ET 27 qui ne la transmet toutefois qu'après une opération de validation exécutée pour tenir compte du bruit thermique existant. Cette opération de validation repose sur la comparaison du niveau des signaux provenant respectivement des opérateurs 14, 141, 142, 143 des voies principale et auxiliaires à une valeur de seuil, fonction du niveau du bruit thermique déterminé par la résistance 28 dans les circuits 25, 251, 252, 253. Un circuit OU 26 dont la sortie est connectée au circuit ET 27, regroupe les sorties des circuits à seuil 25, 251, 252, 253 et le circuit ET 27 délivre l'information de case brouillée qui a été validée.

Cette information de case brouillée est enregistrée, ainsi que cela a été déjà dit dans des circuit mémoire 16 et 36.

La figure 3 représente un exemple de mode de réalisation du circuit 16 de sélection et de mise en mémoire des cases brouillées dont les informations sont utilisées pour le calcul des coefficients de pondération $W_i$. Il comprend un circuit mémoire 28 constitué par un ensemble de registres à décalage 29, 30, 31, 32 comprenant un certain nombre d'éléments R correspondant au nombre optimal de cases brouillées à considérer pour le calcul des coefficients de pondération. Ce nombre établit ainsi déjà une certaine sélection. Les registres sont alimentés respectivement par les informations délivrées par les voies principale et auxiliaires soit $V_p$, $v_1$, $v_2$ et $v_3$. L'ensemble mémoire 28 fonctionne suivant le principe des registres à décalage avec la particularité toutefois que la première information entrée est la première sortie et que seules certaines informations y sont enregistrées, en l'occurrence celles correspondant aux cases effectivement brouillées. La mise en mémoire des informations se fait ainsi sous le contrôle des informations indiquant les cases brouillées délivrées par le dispositif 15 de détection du brouillage. L'inscription des informations dans la mémoire 28 est contrôlée par un ensemble de circuits comprenant une horloge 34 définissant les cases distance dans une récurrence, le détecteur 15 des cases brouilléés et un circuit ET 33 auquel les deux circuits précédents sont connectés. Il est ainsi clair que seules les informations correspondant à des cases effectivement brouillées sont enregistrées dans la mémoire 28, la première information de ce genre dans un élémént marqué 1, la seconde également dans l'élément 1, dont l'information qu'il retenait passe dans l'élément marqué 2 et ainsi de suite.

On a vu dans ce qui précède que suivant l'invention, il était souhaitable de choisir pour le calcul des coefficients de pondération, les informations cases brouillées situées en fin de récurrence. Il est clair également que la mémoire 28 ne pourra enregistrer un nombre d'informations cases brouillées supérieur à R. Dans le cas où le nombre d'informations cases brouillées serait supérieur à ce nombre R, la mémoire n'en enregistrerait que R, correspondant aux R dernières cases les plus lointaines, c'est-à-dire situées en fin de récurrence. Le calcul des coefficients de pondération $W_i$ est effectué dans le dispositif 18 auquel est connectée la mémoire 28, sur les R échantillons ainsi choisis.

Dans le cas où le nombre R' par exemple des cases brouillées est inférieur au nombre R optimal des cases pouvant être mises en mémoire, le calcul des coefficients de pondération se fait avec ces R' échantillons, cette information étant transmise au dispositif de calcul 18 par le compteur 35. Ce compteur 35 compte le nombre de cases distance mises en mémoire dans la mémoire 28 et en fin de récurrence communique ce nombre au dispositif de calcul 18. Par ailleurs, un dispositif à mémoire 36 qui peut être un registre à décalage ou une ligne à retard est connecté entre le dispositif de détection du brouillage 15 et le commutateur 17 contrôlant l'entrée des signaux issus du dispositif de sommation 19 dans le soustracteur 21. Cette mémoire 36, un registre à décalage par exemple, est contrôlée par l'horloge 34 et a pour but de contrôler la position des cases effectivement brouillées dans la récurrence considérée. Cette mémoire 36 a pour but également de retarder d'une durée T égale au temps de calcul des coefficients de pondération $W_i$ augmentée de la durée d'une récurrence, l'arrivée des informations cases effectivement brouillées pour lesquelles est effectuée la combinaison linéaire pondérée; la combinaison linéaire ne se fait donc que pour les cases effectivement brouillées.

On notera que ce retard n'est pas nécessaire pour toutes les récurrences lorsque la variation du gain des antennes auxiliaires est faible d'une récurrence à l'autre; dans ce cas le calcul des coefficients de pondération reste valable pour plusieurs récurrences.

Le calcul des coefficients de pondération récursifs est décrit dans le document "Adaptive noise canceling principales" de Widrow P IEEE, Vol.63, n° 12, déc.1975.

On peut donner dans ce qui suit, à titre d'exemple une méthode de calcul des coefficients de pondération Wi, calcul réalise généralement dans un opérateur programmable.

Vp(r), $v_1(k)$, $v_2(k)$, $v_3(k)$ étant respectivement les signaux complexes issus de la voie principale et des voies auxiliaires à la sortie des filtres EEF 13, 131, 132, 133 correspondant au $k^{ème}$ échantillon brouillé optimal sélectionné, on calcule d'une part, les fonctions de covariance $\gamma_{ij}$ des signaux auxiliaires entre eux:

$\gamma_{ij} = \Sigma_k v_i(k) v_j{}^*(k)$

pour $3 \geqslant j \geqslant i$, $i = 1, 2, 3$, en notant que

$\gamma_{ji} = \gamma^*_{ij}$, le signe $^*$ désignant le conjugué de la quantité qu'il affecte et d'autre part, les functions d'intercorrélation $C_i$ entre le signal principal et les signaux auxiliaires:

$C_i = \Sigma_k Vp(k)v_i{}^*(k)$ $i = 1, 2, 3$

On obtient alors les neuf quantités suivantes:

$\begin{cases} \tau_{11}, \gamma_{22}, \gamma_{33}, \gamma_{12}, \gamma_{13}, \gamma_{23} \\ C_1, C_2, C_3 \end{cases}$

On détermine les grandeurs:

$m_{11} = \gamma_{22}, \gamma_{33} - |\gamma_{23}|^2$
$m_{22} = \gamma_{11} \gamma_{33} - |\gamma_{13}|^2$
$m_{33} = \gamma_{11} \gamma_{22} - |\gamma_{12}|^2$
$m_{21} = \gamma_{13}{}^* \gamma_{23} - \gamma^*_{12} \gamma_{33}$
$m_{31} = \gamma_{12}{}^* \gamma_{23}{}^* - \gamma_{13} \gamma_{22}$
$m_{32} = \gamma_{13}{}^* \gamma_{12} - \gamma_{11} \gamma_{23}{}^*$

puis l'expression $\Delta = m_{11} \gamma_{11} - m_{21} \gamma_{12} + m_{31} \gamma_{13}$

On calcule ensuite les coefficients:

$$n_{11} = \frac{m_{11}}{\Delta}$$

$$n_{22} = \frac{m_{22}}{\Delta}$$

$$n_{33} = \frac{m_{33}}{\Delta}$$

$$n_{21} = \frac{m_{21}}{\Delta}$$

$$n_{31} = \frac{m_{31}}{\Delta}$$

$$n_{32} =$$

$$\frac{m_{32}}{\Delta}.$$

et on obtient finalement les coefficients de pondération désirés:

$W_1 = n_{11}C_1 + n_{21}C_2 + n_{31}C_3$
$W_2 = n_{21}{}^*C_1 + n_{22}C_2 + n_{32}C_3$
$W_1 = n_{31}{}^*C_1 + n_{32}{}^*C_3 + n_{33}C_3$

On notera que le nombre d'échantillons sur lequel ont été calculées les fonctions de covariance et d'intercorrélation est un paramètre variable qui peut être adapté en fonction de la recherche d'un compromis entre la réduction de brouillage et la simplicité des opérations.

## Revendications

1. Procédé de réduction de la puissance des signaux de brouillage reçus par les lobes secondaires d'une antenne de radar à laquelle sont associées des antennes auxiliaires, suivant lequel on effectue une combinaison linéaire pondérée des signaux complexes (Vi) délivrés par les voies auxiliaires (i = 1, 2,...N) que l'on soustrait au signal (Vp) de la voie principale, voies associées respectivement auxdites antennes, avec détermination de coefficients de pondération, pour réduire la puissance de brouillage résultante, caractérisé par les étapes suivantes:

- effectuer sur toutes les voies un traitement préalable d'élimination des échos fixes ou se déplaçant lentement;
- déterminer les cases distance brouillées en comparant le signal reçu dans la voie principale aux signaux reçus respectivement dans les voies auxiliaires et comparer ce niveau de l'information case distance brouillée à un seuil déterminé en fonction du niveau du bruit thermique;
- déterminer les coefficients de pondération (Wi) à partir des fonctions de covariance des signaux auxiliaires (Vi) entre eux et des fonctions d'intercorrélation entre le signal principal (Vp) et les signaux auxiliaires des cases distance brouillées (Vi);
- effectuer la combinaison linéaire pondérée des signaux complexes (Vi) relatifs aux seules cases distance brouillées avec les coefficients de pondération déterminés précédemment (Wi) égale à $\Sigma$ Wi Vi;
- et soustraire le signal résultant de ladite combinaison du signal de la voie principale.

2. Procédé suivant la revendication 1, caractérisé en ce que la détermination des cases effectivement brouillées se fait sur une récurrence et que les informations cases brouillées sont ensuite mises en mémoire de façon telle que pour le calcul des coefficients de pondération, seules sont utilisées les informations cases brouillées correspondant aux cases distance brouillées situées en fin de récurrence, la combinasion linéaire pondérée des signaux issus des voies auxiliaires étant exécutée avec les coefficients de pondération ainsi calculés, sur cette récurrence, dont les signaux sont retardés d'une durée égale à la durée d'une récurrence augmentée de la durée effective du calcul des coefficints de pondération.

3. Procédé suivant la revendication 1, caractérisé en ce qu'il est appliqué successivement à chaque récurrence sauf si le grain des antennes auxiliaires varie suffisamment lentement pour que la variation des coefficients de pondération soit suffisamment lente pour que lesdits coeficients soient applicables sur plusieurs récurrence successives.

4. Dispositif de mise en oeuvre du procédé suivant l'une des revendications 1 à 3, comprenant une antenne principale (0) et une pluralité d'antennes auxiliaires (1, 2, 3) avec leur voie de traitement associée, soumises à des signaux de brouillage de forte puissance, reçus par les lobes secondaires de l'antenne principale et un dispositif de soustraction (21) des signaux issus de la voie principale de traitement et du signal résultant de la combinasion linéaire pondérée des signaux issus des voies auxiliaires de traitement, caractérisé en ce qu'il comprend en combinasion, des filtres éliminateurs des échos fixes et des échos se déplaçant à faible vitesse (13, 131, 132, 133) disposés respectivement dans la voie principale et dans le voies auxiliaires, un dispositif (15) de détection des cases distance brouillées dans une récurrance, connecté aux sorties desdits filtres, un dispositif (16) de sélection et de mise en mémoire desdites cases brouillées, connecté d'une part aux sorties desdits filtres éliminateurs des échos fixes et d'autre part au dispositif (15) de détection des cases brouillées, un dispositif (18) de détermination des coefficients de pondération connecté au dispositif (16) de sélection et mise en mémoire et un dispositif (19) connecté d'une part au dispositif de détermination (18) des coefficients de pondération et d'autre part aux

7

sorties des filtres éliminateurs (13, 132, 133) des voies auxiliaires à travers des circuits à retard (201, 202, 203), ce dispositif (19) effectuant la combinasion linéaire pondérée des signaux des voies auxiliaires avec les coefficients de pondération déterminés dans le dispositif (18) et alimentant le dispositif de sortie (21) connecté par ailleurs à la sortie du filtre (13) éliminateur des échos fixes de la voie principale à travers un circuit à retard (20), à travers un commutateur (17) commandé par un second dispositif à mémoire (36) enregistrant la position des cases distance brouillées dans une récurrance connecté à la sortie du dispositif (15) de détection des cases brouillées, ledit commutateur (17) n'appliquant au dispositif de sortie (21) que la combinasion linéaire calculée les seules cases effectivement brouillées.

5. Dispositif suivant la revendication 4, caractérisé en ce qu'il comprend des dispositif de calcul (14, 141, 142, 142) des modules des signaux de la voie principale et des voies auxiliaires connectés entre les filtres (13, 131, 132, 133) éliminateurs des échos fixes et le dispositif (15) de détection des cases distance brouillées.

6. Dispositif suivant la revendication 5, caractérisé en ce que le dispositif (15) de détection des cases distance brouillées, comprend pour chaque voie auxiliaire un dispositif de comparasion (231, 232, 233) dont une entrée (P) est connectée au circuit de calcul du module (14) de la voie principale, et une autre entrée (Q1, Q2, Q3) est connectée respectivement au curcuit de calcul du module (141, 142, 143) correspondant d'une voie auxuliaire, des circuit à seuil (25, 251, 252, 253) dont le seuil est fixé par une résistance 140 connectés respectivement aux sorties des circuit de calcul des modules de signaux (14, 141, 142, 143) des voies principale et auxiliaires et dont les sorties sont connectées à un circuit "OU" (26), un circuit NON ET (24) regroupant les sorties des dispositifs de copmarasion (231, 232, 233), et un circuit ET (27) connecté aux sorties respectivement du circuit OU (26) et du circuit NON ET (24), délivrant les informations de cases brouillées, validées vis-à-vis du seuil défini par la résistance (140).

7. Dispositif suivant la revendication 6, caractérisé en ce que le seuil établi par la résistance 140 valide les informations de cases distance brouillées vis-à-vis du bruit thermique.

8. Dispositif suivant la revendication 4, caractérisé en ce que le dispositif de sélection et de mise en mémoire (16) est constitué par un ensemble (28) de registres à décalage (29, 30, 31, 32) comportant un nombre déterminé optimal (R) d'éléments (1 à R), les entrées desdits registres étant connectées respectivement aux sorties des filtres éliminateurs des échos fixes (13, 131, 132, 133), la mise en mémoire des informations cases brouillées retenues étant commandée par un circuit ET (33) recevant des informations cases distance d'une horloge (34) et les informations cases distance brouillées du dispositif de détection (15).

9. Diospsitif suivant la revendication 8, caractérisé en ce que le nombre R des éléments choisis pour les registres à décalage (29, 30, 31, 32) correspond au nombre optimal de cases brouillées possibles groupées en fin de récurrence, un compteur (35) étant prévu indiqunt le nombre des informations cases brouillées à utiliser par le dispositif de calcul des coefficients de pondération (18).

10. Dispositif suivant la revendications 4, caractérisé en ce qu'il comprend sur la voie principale et sur les voies auxiliaires un circuit à retard (20, 201, 201, 203) retardant l'application des signaux de la voie principale au dispositif de sortie (21), celle des signaux des voies auxiliaires au disposotif (19) effectuant la combinasion linéaire pondérée desdits signaux auxiliaires, d'une durée égale à celle d'une récurrance augmentée du temps nécessaire au calcul desdits coefficients.

11. Dispositif suivant la revendication 11, caracrérisé en ce que le retard imparti par la mémoire (36) est égal à la durée d'une récurrance augmentée de celle nécessaire au calcul des coefficients de pondération, assurant que la combination linéaire pondérée n'est faite que sur les cases brouillées effectivement.

12. Installation radar comportant un dispositif de réduction de la puissance des signaux de brouillage reçus par les lobes secondaires de l'antenne suivant une des revendications 4 à 11, fonctionnant suivant le procédé des revendications 1 à 3.

**Patentansprüche**

1. Verfahren zur Verminderung der Leistung von über Sekundärzipfel einer Radarantenne empfangenen Störsignalen, wobei der Antenne Hilfsantennen und diesen Hilfskanäle zugeordnet sind und man gemäß dem Verfahren eine gewichtete lineare Kombination der von den Hilfskanälen (i = 1, 2,...N) gelieferten komplexen Signale (Vi) durchführt, die man vom Hauptkanal-Signal (Vp) abzieht, mit Bestimmung der Wichtungskoeffizienten, um die resultierende Störleistung zu vermindern, gekennzeichnet durch folgende Schritte:
auf allen Kanälen erfolgt vorab eine Eliminierung der festen oder sich nur langsam bewegenden Echos;
- die gestörten Entfernungsfächer werden bestimmt, indem das im Hauptkanal empfangene Signal mit den in den verschiedenen Hilfskanälen empfangenen Signalen verglichen wird und dieser Informationspegel für das gestörte Entfernungsfach mit einem vom Pegel des Wärmerauschens abhängigen Schwellwert verglichen wird;
- die Wichtungskoeffizienten (Wi) werden ausgehend von den Kovarianzfunktionen der Hilfssignale (Vi) untereinander und von den Interkorrelationsfunktionen zwischen dem Hauptsignal (Vp) und den Hilfssignalen der gestörten Entfernungsfächer (Vi) bestimmt;
- man bildet die lineare gewichtete Kombination der komplexen Signale (Vi), die sich nur auf die gestörten Entfernungsfächer beziehen, mit den vorher bestimmten Wichtungskoeffizienten (Wi) gleich $\Sigma$ WiVi;
- man zieht das aus dieser Kombination resultierende Signal vom Hauptkanalsignal ab.

# 0 068 909

2. Verfahren nach Anspruch 1, dadurch gekennzeichnet, daß die Bestimmung der tatsächlich gestörten Fächer über eine Rekurrenz erfolgt und daß die Informationen der gestörten Fächer dann so gespeichert werden, daß für die Berechnung der Wichtungskoeffizienten nur die Informationen der gestörten Fächer verwendet werden, die den am Ende der Rekurrenz liegenden gestörten Entfernungsfächern entsprechen, wobei die lineare gewichtete Kombination der von den Hilfskanälen ausgehenden Signale mit den auf diese Weise berechneten Wichtungskoeffizienten in dieser Rekurrenz durchgeführt wird, deren Signale um eine Zeitdauer gleich der Dauer einer Rekurrenz, verlängert um die tatsächliche Dauer der Berechnung der Wichtungskoeffizienten verzögert werden.

3. Verfahren nach Anspruch 1, dadurch gekennzeichnet, daß es nacheinander auf jede Rekurrenz angewandt wird, außer wenn der Gewinn der Hilfsantennen hinreichend langsam variiert, daß die Variation der Wichtungskoeffizienten ausreichend langsam erfolgt, so daß die Koeffizienten über mehrere aufeinanderfolgende Rekurrenzen anwendbar sind.

4. Vorrichtung zur Durchführung des Verfahrens nach einem der Ansprüche 1 bis 3 mit einer Hauptantenne (0) und einer Vielzahl von Hilfsantennen (1, 2, 3) mit den ihnen zugeordausgesetzt sind, welche von Sekundärzipfeln der Hauptantenne empfangen werden, und mit einer Subtraktionsvorrichtung (21), der die vom Hauptverarbeitungskanal stammenden Signale Hilfsbearbeitungskanälen stammenden Signale zugeführt werden, dadurch gekennzeichnet, daß sie in Kombination aufweist:
- Filter zur Eliminierung der festen Echos und der sich mit niedriger Geschwindigkeit bewegenden Echos (13, 131, 132, 133), die im Hauptkanal bzw. den Hilfskanälen angeordnet sind,
- eine an die Ausgänge dieser Filter angeschlossene Vorrichtung (15) zur Erkennung der in einer Rekurrenz gestörten Entfernungsfächer,
- eine einerseits an die Ausgänge der Filter zur Eliminierung der festen Echos und andererseits an die Vorrichtung zur Entdeckung der gestörten Fächer angeschlossene Vorrichtung (16) zur Auswahl und zur Speicherung dieser gestörten Fächer,
- eine an die Vorrichtung (16) zur Selektion und zur Speicherung angeschlossene Vorrichtung (18) zur Bestimmung der Wichtungskoeffizienten
- und eine einerseits an die Vorrichtung (18) zur Bestimmung der Wichtungskoeffizienten und andererseits an die Ausgänge der Eliminationsfilter (131, 132, 133) der Hilfskanäle über Verzögerungsschaltkreise (201, 202, 203) angeschlossene Vorrichtung (19), die die lineare gewichtete Kombination der Hilfskanalsignale mit den in der Vorrichtung (18) bestimmten Wichtungskoeffizienten durchführt und die Ausgangsvorrichtung (21), die im übrigen an den Ausgang des Filters (13) zur Eliminierung der Festechos des Hauptkanals über einen Verzögerungskreis (20) angeschlossen ist, über einen von einer zweiten Speichervorrichtung (36) gesteuerten Schalter (17) speist, die die Lage der gestörten Entfernungsfächer in einer Rekurrenz registriert und an den Ausgang der Vorrichtung (15) zur Erkennung der gestörten Fächer angeschlossen ist, wobei dieser Schalter (17) an die Ausgangsvorrichtung (21) nur die lineare berechnete Kombination für die tatsächlich gestörten Fächer anlegt.

5. Vorrichtung nach Anspruch 4, dadurch gekennzeichnet, daß sie Rechenvorrichtungen (14, 141, 142, 143) der Module der Hauptkanalsignale und der Hilfskanalsignale aufweist, die zwischen den Filtern (13, 131, 132, 133), mit denen die festen Echos eliminiert werden, und der Vorrichtung (15) zur Erkennung der gestörten Entfernungsfächer angeschlossen sind.

6. Vorrichtung nach Anspruch 5, dadurch gekennzeichnet, daß die Vorrichtung (I5) zur Erkennung der gestörten Entfernungsfächer für jeden Hilfskanal eine Vergleichsvorrichtung (231, 232, 233) aufweist, die mit je einem Eingang (P) an den Modulrechenkreis (14) des Hauptkanals und mit einem anderen Eingang (Q1, Q2, Q3) je an den einem Hilfskanal entsprechenden Modulrechenkreis (141, 142, 143) angeschlossen ist, daß weiter die Vorrichtung (15) Schwellwertkreise (25, 251, 252, 253) aufweist, deren Schwellwert durch einen Widerstand (140) festgelegt ist und die an die Ausgänge der jeweiligen Rechenkreise der Signalmodule (14, 141, 142, 143) des Hauptkanals und der Hilfskanäle angeschlossen sind und deren Ausgänge an einen ODER-Kreis (26) führen, wobei ein NICHT-UND-Kreis (24) die Ausgänge der Vergleichsvorrichtungen (231, 232, 233) zusammenfaßt und ein UND-Kreis (27) an die Ausgänge des ODER-Kreises (26) und des NICHT-UND-Kreises (24) angeschlossen ist und die Störfachinformationen liefert, soweit sie die durch den Widerstand (140) definierte Schwelle überschreiten.

7. Vorrichtung nach Anspruch 6, dadurch gekennzeichnet, daß die vom Widerstand (140) festgelegte Schwelle die Informationen über die gestörten Entfernungsfächer gegenüber dem Wärmerauschen abhebt.

8. Vorrichtung nach Anspruch 4, dadurch gekennzeichnet, daß die Vorrichtung zur Selektion und zur Speicherung (16) von einer Gruppe (28) von Schieberegistern (29, 30, 31, 32) gebildet wird, die eine gegebene optimale Anzahl (R) von Elementen (1 bis R) besitzt und deren Eingänge an die Ausgänge der Filter zur Eliminierung der Festechos (13, 131, 132, 133) angeschlossen sind, wobei die Einspeicherung der berücksichtigten Informationen betreffend die gestörten Fächer durch einen UND-Kreis (33) gesteuert wird, der die Informationen betreffend die Entfernungsfächer von einem Taktgeber (34) und die Informationen betreffend die gestörten Entfernungsfächer von der Erkennungsvorrichtung (15) zugeführt erhält.

9. Vorrichtung nach Anspruch 8, dadurch gekennzeichnet, daß die Zahl R von Elementen, die für die Schieberegister (29, 30, 31, 32) gewählt ist, der optimalen Zahl von möglichen gestörten Fächern entspricht, die am Ende der Rekurrenz gruppiert sind, wobei ein Zähler (35) vorgesehen ist, der die Anzahl der von der Rechenvorrichtung für die Wichtungskoeffizienten (18) zu verwendenden Störfachinformationen angibt.

10. Vorrichtung nach Anspruch 4, dadurch gekennzeichnet, daß sie im Hauptkanal und in den Hilfskanälen einen Verzögerungskreis (20, 201, 202, 203) aufweist, der die Weiterleitung der Signale des Hauptkanals an die Ausgangsvorrichtung (21) sowie die Weiterleitung der Signale der Hilfskanäle an die Vorrichtung (19), die die lineare gewichtete Kombination der Hilfssignale durchführt, um eine Dauer gleich der einer Rekurrenz verzögert, erhöht um die für die Berechnung der Koeffizienten benötigten Zeit.

11. Vorrichtung nach Anspruch 10, dadurch gekennzeichnet, daß die vom Speicher (36) eingeführte Verzögerung gleich der Dauer einer Rekurrenz ist, erhöht um die für die Berechnung der Wichtungskoeffizienten benötigten Zeit, so daß sichergestellt ist, daß die lineare gewichtete Kombination nur bezüglich der tatsächlich gestörten Fächer durchgeführt wird.

12. Radaranlage mit einer Vorrichtung zur Verringerung der Leistung der Störsignale, die von den Sekundärzipfeln der Antenne gemäß einem der Ansprüche 4 bis 11 empfangen wurden, die nach dem Verfahren gemäß den Ansprüchen 1 bis 3 betrieben wird.

## Claims

1. A method for reducing the power of the jamming signals received by the sidelobes of a radar antenna with which auxiliary antennas are associated, and consisting in forming a linear weighted combination of the complex signals (Vi) delivered by the auxiliary channels (i = 1, 2,... N) which is subtracted from the signal (Vp) of the main channel, said channels being associated respectively with said antennas, with determination of weighting coefficients, in order to to reduce the resultant jamming power, characterized in that it comprises the steps of:
- carrying out on all channels a preliminary process of elimination of fixed echoes or slow-displacements echoes;
- determining the jammed range-intervals by comparing the signals received in the main channel with the signals received respectively in the auxiliary channels, and comparing this level of information concerning the jammed range-interval with a threshold determined with respect to thermal noise;
- determining the weighting coefficient (Wi) on the basis of the covariance function of the auxiliary signals (Vi) among themselves and of the intercorrelation functions between the main signal (Vp) and the auxiliary signals (Vi) of the jammed range-intervals;
- forming the weighted linear combination of the complex signals (Vi) relating solely to the jammed range-intervals with the weighting coefficients determined earlier (Wi) equal to $\Sigma$ WiVi;
- and subtracting the signal resulting from said combination from the main channel signal.

2. A method according to claim 1, characterized in that the determination of the effectively jammed range-intervals is performed on one recurrence and that the jammed range-interval information is then stored in memory so as to ensure that only the jammed range-interval information corresponding to the jammed range-intervals located at the end of recurrence is employed for computation of the weighting coefficients, the weighted linear combination of the signals delivered by the auxiliary channels being formed with the weighting coefficients thus computed on said recurrence, the signals of which are delayed by a time duration equal to the duration of one recurrence increased by the actual time of computation of the weighting coefficients.

3. A method according to claim 1, characterized in that said method is applied successively to each recurrence except in the event of a sufficiently low rate of variation in the gain of the auxiliary antennas and consequently a sufficiently low rate of variation in the weighting coefficients to ensure that said coefficients can be applied to several recurrences in succession.

4. A device for carrying out the method according to one of claims 1 to 3, comprising a main antenna (0) and a plurality of auxiliary antennas (1, 2, 3) with their associated processing channel, said antennas being subjected to high-power jamming signals received by the sidelobes of the main antenna, and a subtraction device (21) for subtracting the signal resulting from the main processing dhannel from of signal resulting from the linear weighted combination of the signals coming from the auxiliary processing channels, characterized in that it includes, in combination,
- filters for eliminating fixed echos and slow displacement echos (13, 131, 132, 133) located respectively in the main channel and in the auxiliary channels,
- a device (15) which serves to detect jammed range-intervals in a recurrence connected to the outputs of said filters,
- a device (16) which serves to select and store said jammed range-intervals in memory connected on the one hand to the outputs of said fixed-echo elimination filters and on the other hand tothe jammed range-interval detection device (15)
- a device (18) which serves to determine weighting coefficients and which is connected to the selection and storage device (16),
- and a device (19) connected on the one hand to the weighting-coefficient determination device (18) and on the other hand to the outputs of the elimination filters (131, 132, 133) of the auxiliary channels through delay circuits (201, 202, 203), the function of said device (19) being to form the weighted linear combination of the signals of the auxiliary channels with the weighting coefficients determined by device (21) which is also connected to the output of the fixed-echo elimination filter (13) of the main channel through a delay circuit (20), said switch (17) being controlled by a second memory device (36) which records the position of the jammed range-intervals in a recurrence and is connected to the output of the jammed range-interval detection device (15), the function of said switch (17) being to apply to the output device (21) only the linear combination which is computed solely for effectively jammed range-intervals.

5. A device according to claim 4, characterized in that it comprises units (14, 141, 142, 143) for computing the moduli of the signals of the main channel and of the auxiliary channels, said units being connected between the fixed-echo elimination filters (13, 131, 132, 133) and the jammed rangeinterval detection device (15).

6. A device according to claim 5, characterized in that the jammed range-interval detection device (15) comprises for each auxiliary channel a comparison unit (231, 232, 233) having one input (P) connected to the modulus computation circuit (14) of the main channel, and another input (QI, Q2, Q3) connected respectively to the corresponding modulus computation circuit (141, 142, 143) corresponding to an auxiliary channel, threshold circuits (25, 251, 252, 253) in which the threshold value is established by a resistor (140), said threshold circuits being connected respectively to the outputs of the circuits (14, 141, 142, 143) for computing the moduli of signals of the main and auxiliary channels, the outputs of said threshold circuits being connected to an OR-circuit (26), a NAND-circuit (24) to which are connected the grouped outputs of the comparison devices (231, 232, 233), and an AND-circuit (27) connected to the outputs respectively of the OR-circuit (26) and of the NAND-circuit (24) for delivering the jammed range-interval information which is validated with respect to the threshold defined by said resistor (140).

7. A device according to claim 6, characterized in that the threshold established by the resistor (140) validates the jammed range-interval informations with respect to thermal noise.

8. A device according to claim 4, characterized in that the (28) of shift registers (29, 30, 31, 32) having a predetermined optimum number (R) of elements (1 to R), the inputs of said registers being connected respectively to the outputs of the fixed-echo elimination filters (13, 131, 132, 133), storage of the retained jammed range-interval information being controlled by an AND-circuit (33) which receives range-interval information from a clock (34) and receives the jammed range-interval information from the detection device (15).

9. A device according to claim 8, characterized in that the number R of elements selected for the shift registers (29, 30, 31, 32) corresponds to the optimum number of possible jammed range-intervals which are grouped together at the end of recurrence, a counter (35) being provided for indicating the number of pieces of jammed range-interval information to be utilized by the device for computation of weighting coefficients (18).

10. A device according to claim 4, characterized in that said device is provided on the main channel and on the auxiliary channels with a delay circuit (20, 201, 202, 203) for delaying application of the signals of the main channel to the output device (21) and the application of the signals of the auxiliary channels to the device (19) for forming the weighted linear combination of said auxiliary signals by a time duration equal to the duration of a recurrence increased by the time required for computation of said coefficients.

11. A device according to claim 10, characterized in that the time-delay allowed by the memory (36) is equal to the duration of a recurrence increased by the time required for that the weighted linear combination is formed only on effectively jammed range-intervals.

12. A radar installation comprising a device for reducing the power of jamming signals received by the sidelobes of the antenna according to one of claims 1 to 11, operating in accordance with the method defined in claim 1.

$\square$ |⊡|. 1

FIG. 2

FIG. 3